# EUROPÄISCHE PATENTANMELDUNG

(11) **EP 4 186 617 A1**
(43) Veröffentlichungstag der Anmeldung: **31.05.2023**
(21) Anmeldenummer: 22203182.5
(22) Anmeldetag: 24.10.2022
(51) Int. Cl.: B22F 5/00, B22F 5/04, B22F 10/25, B22F 10/28, B33Y 10/00, C22C 1/04, C22C 14/00, B33Y 80/00

(54) **VERFAHREN ZUR HERSTELLUNG EINES SCHLAGZÄHEN BAUTEILS UND ENTSPRECHEND SCHLAGZÄHES BAUTEIL**

(30) Priorität: 26.11.2021 DE 102021131094
(71) Anmelder: MTU Aero Engines AG, 80995 München (DE)
(72) Erfinder: Schloffer, Martin, 80995 München (DE)

(57) **Zusammenfassung**

Die vorliegende Erfindung betrifft ein Verfahren zur Herstellung eines schlagzähen Bauteils (20), insbesondere eines Bauteils (20) einer Strömungsmaschine, wie eines Flugzeugtriebwerkes, sowie ein entsprechendes Bauteil (20), wobei das Bauteil (20) zumindest teilweise über ein additives Fertigungsverfahren aus einem Pulvermaterial so hergestellt wird, dass das Bauteil (20) mindestens einen ersten Bereich aus einem Material mit einer ersten Zähigkeit und mindestens einem zweiten Bereich (24) aus einem Material mit einer zweiten Zähigkeit gebildet wird, wobei die zweite Zähigkeit größer als die erste Zähigkeit ist und wobei der zweite Bereich (24) zumindest in einem Teil des Bauteils als eine kontinuierliche oder unterbrochene Schicht parallel zur Oberfläche des Bauteils (20) in einem Abstand zur Oberfläche des Bauteils (20) ausgebildet wird.

## Beschreibung

### HINTERGRUND DER ERFINDUNG

### GEBIET DER ERFINDUNG

Die vorliegende Erfindung betrifft ein Verfahren zur Herstellung eines schlagzähen Bauteils, insbesondere eines Bauteils einer Strömungsmaschine, wie eines Flugzeugtriebwerkes, wobei das Bauteil zumindest teilweise über ein additives Fertigungsverfahren aus einem Pulvermaterial hergestellt wird. Außerdem betrifft die Erfindung ein entsprechend schlagzähes Bauteil, insbesondere ein Bauteil einer Strömungsmaschine bzw. eine Komponente eines Flugzeugtriebwerkes.

### STAND DER TECHNIK

In Strömungsmaschinen, wie Gasturbinen oder Flugzeugtriebwerken, kommen Komponenten zum Einsatz, die hohe Anforderungen hinsichtlich ihrer Festigkeit, Hochtemperaturbeständigkeit, Korrosionsbeständigkeit usw. erfüllen müssen. Insbesondere bei Leit - oder Laufschaufeln von Flugzeugtriebwerken muss auch eine gewisse Schlagzähigkeit gewährleistet werden, da bei schlagartigen Beanspruchungen, wie beispielsweise Auftreffen von Fremdkörpern, eine Beschädigung oder ein Versagen der entsprechenden Komponente vermieden werden muss. Darüber hinaus müssen derartige Komponenten insbesondere bei Flugzeugtriebwerken ein möglichst geringes Gewicht aufweisen, um eine effiziente Turbinenleistung zu ermöglichen. Darüber hinaus sollten die Komponenten möglichst einfach herstellbar sein bzw. ein entsprechendes Material hierfür leicht verarbeitbar sein.

Einen möglichen Werkstoff für die Verwendung bei Leit - oder Laufschaufeln von Strömungsmaschinen stellen die intermetallischen TiAl - Legierungen dar, die ein niedriges spezifisches Gewicht aufweisen und aufgrund der intermetallischen Phasen, wie γ - TiAl und α₂ - Ti₃Al, in ihrem Gefüge eine hohe Festigkeit zeigen. Durch pulvermetallurgische Verarbeitung oder generative Herstellverfahren sind Komponenten aus diesen Legierungen auch mit überschaubarem Aufwand herstellbar, wie dies beispielsweise in der US 2019 / 0 299 288 A1 bereits beschrieben ist. Allerdings ist die Schlagzähigkeit dieser Materialien oder daraus hergestellter Bauteile verbesserungswürdig, da die hochfesten intermetallischen Phasen zu einem spröden Bruchverhalten neigen. Zwar ist in der US 2019 / 0 299 288 A1 ebenfalls bereits beschrieben, dass bei der generativen Herstellung von beispielsweise Laufschaufeln von Flugzeugtriebwerken Bereiche mit unterschiedlicher Materialzusammensetzung und entsprechend unterschiedlichen Eigenschaften, wie erhöhter Festigkeit oder Duktilität erzeugt werden können, aber es besteht weiterhin Bedarf speziell die Schlagzähigkeit zu verbessern.

### OFFENBARUNG DER ERFINDUNG

### AUFGABE DER ERFINDUNG

Es ist deshalb Aufgabe der vorliegenden Erfindung ein Verfahren zur Herstellung eines schlagzähen Bauteils insbesondere für eine Strömungsmaschine, wie ein Flugzeugtriebwerk, sowie ein entsprechendes Bauteil, wie eine Leit - oder Laufschaufel eines Flugtriebwerks bereitzustellen, sodass auch weniger zähe Werkstoffe, wie intermetallische TiAl - Legierungen für entsprechende Komponenten Verwendung finden können und die entsprechenden Bauteile gleichwohl eine ausreichende Zähigkeit und insbesondere Schlagzähigkeit aufweisen. Insbesondere sollen derartige Bauteile einfache herstellbar und zuverlässig in der Anwendung sein.

### TECHNISCHE LÖSUNG

Diese Aufgabe wird gelöst durch ein Verfahren mit den Merkmalen des Anspruchs 1 sowie ein Bauteil mit den Merkmalen des Anspruchs 9. Vorteilhafte Ausgestaltungen sind Gegenstand der abhängigen Ansprüche.

Die vorliegende Erfindung schlägt zur Herstellung eines schlagzähen Bauteils ein generatives Verfahren einzusetzen, wobei das Bauteil zumindest teilweise über das additive Fertigungsverfahren aus einem Pulvermaterial hergestellt wird, sodass das Bauteil in einfacher Weise so aufgebaut werden kann, dass das Bauteil mindestens einen ersten Bereich aus einem Material mit einer ersten Zähigkeit und mindestens einem zweiten Bereich aus einem Material mit einer zweiten Zähigkeit aufweist, wobei die zweite Zähigkeit größer als die erste Zähigkeit ist. Dadurch kann das Bauteil durch Zuordnung unterschiedlicher Eigenschaften zu unterschiedlichen Bereichen des Bauteils ein ausgewogenes Eigenschaftsprofil aufweisen und insbesondere auch eine ausreichende Zähigkeit aufweisen. Erfindungsgemäß wird dies insbesondere dadurch erreicht, dass der zweite Bereich zumindest in einem Teil des Bauteils als eine kontinuierliche oder unterbrochene Schicht, vorzugsweise parallel zur Oberfläche des Bauteils in einem Abstand zur Oberfläche des Bauteils ausgebildet wird. Durch die Anordnung im Inneren des Bauteils ist die zähe Schicht mit erhöhter Zähigkeit vor Umgebungseinflüssen geschützt, aber kann ausreichend schnell nach einer Risseinleitung von der Bauteiloberfläche die weitere Ausbreitung des Risses ins Bauteilinnere verhindern. Dazu ist es ausreichend das zähere Material lediglich in Form einer Schicht vorzusehen, die also eine deutlich größere Ausdehnung in Breiten - und Längsrichtung gegenüber der Dickenrichtung aufweist, wenn man die Breiten -, Längs - und Dickenrichtung als unabhängige Raumrichtungen angepasst an die Ausrichtung der Schicht betrachtet. Insbesondere kann die Schicht als dünne Schicht ausgebildet sein, bei der die Dicke der Schicht weniger als 30%, insbesondere weniger als 10% der maximalen Länge oder Breite aufweist. Entsprechend wird auch die Gesamtfestigkeit des Bauteils nicht merklich verringert.

Bei der additiven Fertigung kann das Bauteil lagenweise auf einem Substrat oder einem vorher erzeugten Teil des Bauteils aus Pulvermaterial aufgebaut und zu einem festen Bauteil gefügt werden, wobei das Verfahren, insbesondere aus einer Gruppe ausgewählt sein kann, die selektives Laserschmelzen, selektives Elektronenstrahlschmelzen, selektives Lasersintern, selektives Elektronenstrahlsintern und Pulverauftragsschweißen umfasst.

Die Schicht kann in einem Schnitt durch das Bauteil, insbesondere senkrecht zu einer Aufbaurichtung, einen geschlossenen Ringverlauf aufweisen und/oder als zusammenhängende Linie oder als unterbrochene Linie beabstandet zur Oberfläche des Bauteils verlaufen.

Die Zähigkeit eines beid- oder mehrseitig an die Schicht angrenzenden Materials ist insbesondere geringer als die zweite Zähigkeit und kann insbesondere der ersten Zähigkeit entsprechen.

In einem Schnitt durch das Bauteil, insbesondere senkrecht zu einer Aufbaurichtung, kann eine Schnittlinie der Schicht bzw. der Querschnittsverlauf durch die Schicht zwei Materialbereiche mit geringerer Zähigkeit, insbesondere der ersten Zähigkeit, voneinander trennen und einen Verzahnungsverlauf aufweisen, welcher die getrennten Bereiche formschlüssig, insbesondere in alle Richtungen parallel zum Schnitt, ineinander verzahnen kann.

Das Material mit zweiter bzw. erhöhter Zähigkeit kann gegenüber dem Material mit erster, niedrigerer Zähigkeit durch eine unterschiedliche additive Abscheidung, insbesondere durch eine additive Abscheidung mit einem oder mehreren unterschiedlichen Abscheideparametern erzeugt werden, sodass das gleiche Ausgangsmaterial verwendet werden kann. Alternativ ist es auch möglich für die zähe Schicht auch unterschiedliches Pulvermaterial einzusetzen.

Der oder die unterschiedlichen Abscheideparameter bei der additiven Abscheidung können durch unterschiedliche Aufschmelz - oder Sintertemperaturen und / oder unterschiedliche Haltezeiten im aufgeschmolzenem Zustand oder im erwärmten Zustand und / oder unterschiedliche Umgebungsdrücke gegeben sein, wobei die unterschiedlichen Abscheidebedingungen ganz allgemein zu unterschiedlichen chemischen Zusammensetzungen und / oder unterschiedlichen Gefügeausbildungen in den jeweiligen Bereichen führen sollen.

Insbesondere können die unterschiedlichen Abscheideparameter des Pulvermaterials so gewählt werden, dass unterschiedliche Mengen an Bestandteilen des Pulvermaterials verdampfen, sodass dadurch eine unterschiedliche chemische Zusammensetzung der zähen Schicht gegenüber den übrigen Bereichen des Bauteils eingestellt werden kann. Im Falle von TiAl - Legierungen kann ein erhöhtes Abdampfen von Aluminium zu einer Verringerung des Aluminiumanteils bis hin zur Ausbildung einer Ti - Legierung führen, wobei durch Ti - reichere Phasen eine erhöhte Duktilität des Materials erzielt werden kann.

Alternativ oder zusätzlich zu unterschiedlichen Abscheidebedingungen bei der additiven Fertigung kann die erhöhte Zähigkeit der zähen Schicht durch eine Nachbearbeitung während der additiven Abscheidung, also insbesondere nach der Abscheidung von jeder oder mehreren Lagen erzeugt werden. Für die Nachbearbeitung kann ein hochenergetischer Strahl, wie einem Laser - oder Elektronenstrahl, eingesetzt werden, welcher vorzugsweise auch für die additive Herstellung verwendet wird.

Die zähe Schicht kann insbesondere erzeugt werden, indem nach der additiven Abscheidung einer Lage die betreffende Lage oder mehrere aufeinanderfolgende Lagen gemeinsam nochmals entlang einer Linienkontur zur Bildung einer Lage der Schicht mit dem hochenergetischen Strahl behandelt werden bzw. durch ein bereichsweises Mehrfachüberscannen. Dadurch können zähere Mantelflächen, Gitter- und/oder Netzstrukturen innerhalb des Bauteils erzeugt werden.

Die Nachbearbeitung kann durch eine erneute Erwärmung oder ein erneutes Aufschmelzen zumindest eines Teils einer bereits additiv abgeschiedenen Lage des Bauteils, vorzugsweise in einer Breite von 100 µm bis 2000 µm, insbesondere 200 µm bis 1500 µm und / oder einer Tiefe von mindestens einer Lagendicke erfolgen, wobei insbesondere bestimmte Bestandteile des Materials im Bereich der auszubildenden zähen Schicht verdampft werden können, wie z.B. Aluminium bei TiAl - Legierungen.

Für die Herstellung von schlagzähen Bauteilen aus überwiegend TiAl - Legierungen kann als Pulvermaterial zur additiven Abscheidung ein Pulver einer TiAl - Legierung und / oder eine Mischung aus Pulvern der einzelnen Elemente zur Bildung einer TiAl - Legierung verwendet werden. Insbesondere kann eine TiAl - Legierung verwendet werden, die 43,5 bis 48 at.% Al, 4 bis 6 at.% Nb und von den Legierungselementen Mo, W, Zr, Si, C und B in Summe bis zu 2 at.% enthält sowie als Rest Ti und unvermeidbare Verunreinigungen. Vorzugsweise kann eine Legierung mit 43,5 at.% Al, 4 at.% Nb, 1 at.% Mo und 0,1 at.% Bor sowie Rest Ti und unvermeidbaren Verunreinigungen oder eine angepasste Legierung, die nach der Fertigung die oben genannte Zusammensetzung aufweist, verwendet werden, da eine derartige Legierung ein vorteilhaftes Eigenschaftsprofil aufweist.

Das Bauteil kann nach der additiven Fertigung zur Optimierung der Gefügeausbildung einer Wärmebehandlung unterzogen werden, um die Gefüge des Materials mit erster Zähigkeit und des Materials mit zweiter Zähigkeit einzustellen.

Entsprechend wird nach einem weiteren Aspekt der Erfindung, für den unabhängig von und in Kombination mit anderen Aspekten der Erfindung Schutz beansprucht wird, ein schlagzähes Bauteil vorgeschlagen, welches insbesondere über ein additives Fertigungsverfahren und vorzugsweise gemäß der vorangegangenen Beschreibung hergestellt werden kann, wobei das Bauteil mindestens einen ersten Bereich aus einem Material mit einer ersten Zähigkeit und mindestens einen zweiten Bereich aus einem Material mit einer zweiten Zähigkeit aufweist, wobei die zweite Zähigkeit größer als die erste Zähigkeit ist. Der zweite Bereich mit erhöhter Zähigkeit ist hierbei zumindest in einem Teil des Bauteils als eine kontinuierliche oder unterbrochene Schicht in einem Abstand zur Oberfläche des Bauteils ausgebildet.

Die zähe Schicht mit gegenüber dem Rest des Bauteils erhöhter Zähigkeit kann zumindest in einem Teil des Bauteils parallel zur Oberfläche des Bauteils verlaufen, wobei die zähe Schicht mit erhöhter Zähigkeit sich 100 µm bis 1200 µm, insbesondere 200 µm bis 500 µm unterhalb der Bauteiloberfläche befinden kann. Hierbei kann die zähe Schicht aus dem Material mit erhöhter Zähigkeit eine in Richtung senkrecht zur Bauteiloberfläche sich erstreckende Schichtdicke von 100 µm bis 2000 µm, insbesondere 200 µm bis 1500 µm aufweisen.

Bei der zähen Schicht kann es sich nicht nur um eine kontinuierlich ausgebildete Schicht handeln, sondern die zähe Schicht kann auch unterbrochen sein und insbesondere eine Netz - oder Gitterstruktur aufweisen.

Die unterschiedliche Zähigkeit der zähen Schicht gegenüber dem restlichen Material des Bauteils durch eine unterschiedliche chemische Zusammensetzung der Materialien und / oder eine unterschiedliche Mikrostruktur erzielt werden.

Bei einem Bauteil aus einer TiAl - Legierung kann die TiAl - Legierung 43,5 at.% Al, 4 at.% Nb, 1 at.% Mo und 0,1 at.% Bor sowie Rest Ti und unvermeidbaren Verunreinigungen enthalten. Das Material der zähen Schicht mit erhöhter Zähigkeit kann ein Material mit verringertem Aluminium - Gehalt sein, insbesondere eine Ti - Legierung mit 10 bis 20 at.% Al, 5,7 bis 6,4 at.% Nb, 1,4 bis 1,6 at.% Mo und 0,1 bis 0,2 at.% Bor sowie Rest Ti und unvermeidbare Verunreinigungen, vorzugsweise eine Ti - Legierung mit 10 at.% Al, 6,4 at.% Nb, 1,6 at.% Mo und 0,2 at.% Bor sowie Rest Ti und unvermeidbare Verunreinigungen.

Entsprechend kann das Material mit erster Zähigkeit mit einem intermetallischen TiAl - Gefüge mit γ - TiAl und α₂ - Ti3Al und das Material mit zweiter Zähigkeit mit einer Mikrostruktur einer Ti - Legierung auf Basis von α - Phase, β - Phase und / oder ω - Phase aufgebaut sein.

### KURZBESCHREIBUNG DER FIGUREN

Die beigefügten Zeichnungen zeigen in rein schematischer Weise in
- Fig.1: eine schematische Darstellung einer Vorrichtung zur generativen oder additiven Herstellung von erfindungsgemäßen Bauteilen am Beispiel des selektiven Elektronenstrahlschmelzens,
- Fig. 2: eine perspektivische Darstellung eines ersten Ausführungsbeispiels eines erfindungsgemäßen Bauteils,
- Fig. 3: eine Darstellung einer erfindungsgemäß hergestellten Schaufel für ein Flugtriebwerk und in
- Fig. 4: einen Querschnitt durch eine Schaufel eines Flugtriebwerks, die entsprechend dem erfindungsgemäßen Verfahren hergestellt wird.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

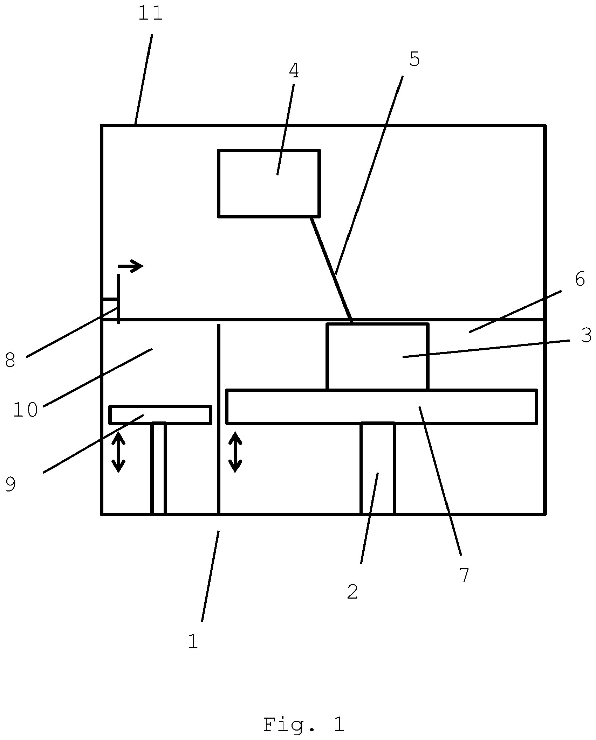

Die Figur 1 zeigt in einer rein schematischen Darstellung eine Vorrichtung 1, wie sie beispielsweise für das selektive Elektronenstrahlschmelzen zur generativen Herstellung eines Bauteils und insbesondere einer Leit - oder Laufschaufel eines Flugzeugtriebwerks Verwendung finden kann. Die Vorrichtung 1 umfasst einen Hubtisch 2, auf dessen Plattform 7 ein Halbzeug 3 angeordnet ist, auf dem lageweise Material abgeschieden wird, um ein dreidimensionales Bauteil in Form einer Leit - oder Laufschaufel für eine Strömungsmaschine zu erzeugen. Anstelle des Halbzeugs 3 kann für die Abscheidung einer ersten Materiallage auch ein Substrat auf der Plattform 7 vorgesehen sein. Zur Abscheidung einer Lage wird mittels des Schiebers 8 Pulver 10, das sich oberhalb eines Hubtisches 9 in einem Pulvervorrat befindet, lagenweise über das Halbzeug 3 geschoben und anschließend durch den Elektronenstrahl 5 einer Elektronenquelle 4 aufgeschmelzen, sodass sich die Pulverpartikel untereinander und mit dem bereits vorhandenen Halbzeug 3 verbinden können und nach dem Erstarren eine stoffschlüssige Verbindung ausbilden. Die Verbindung des Pulvermaterials in einer Pulverlage mit dem Halbzeug 3 durch Aufschmelzen und erneutes Erstarren erfolgt durch den Elektronenstrahl 5 abhängig von der gewünschten Kontur des zu fertigenden Bauteils, sodass beliebige, dreidimensionale Formen erzeugt werden können. Entsprechend wird der Elektronenstrahl 5 über das Pulverbett 6 geführt, um durch unterschiedliche Auftreffpunkte auf dem Pulverbett entsprechend der Kontur des dreidimensionalen Bauteils in einer Schnittebene durch das zu fertigende Bauteil in der Pulverlage Pulvermaterial aufzuschmelzen und mit dem bereits erzeugten Teil eines Bauteils oder einem anfänglich bereit gestellten Substrat zu verbinden. Hierbei kann der Elektronenstrahl 5 durch eine geeignete Ablenkeinheit über die Oberfläche des Pulverbetts 6 geführt werden und / oder das Pulverbett könnte gegenüber dem Elektronenstrahl 5 bewegt werden.

Um unerwünschte Reaktionen mit der Umgebungsatmosphäre beim Aufschmelzen zu vermeiden, kann der Prozess in einem abgeschlossenen Raum, der durch ein Gehäuse 11 der Vorrichtung 1 bereitgestellt wird, stattfinden und es kann zudem eine Vakuumatmosphäre oder inerte Gasatmosphäre bereitgestellt werden, um beispielsweise Oxidation des Pulvermaterials und dergleichen beim Abscheiden der einzelnen Lagen zu vermeiden. Als inertes Gas kann beispielsweise Stickstoff verwendet werden, welches über eine nicht dargestellte Gasversorgung bereitgestellt wird.

Anstelle des Inertgases könnte auch ein anderes Prozessgas verwendet werden, wenn beispielsweise eine reaktive Abscheidung des Pulvermaterials gewünscht ist.

Darüber hinaus sind auch andere energiereiche Strahlungsarten denkbar, wie beispielsweise Laserstrahlen oder andere Teilchenstrahlen oder Lichtstrahlen, die bei der Stereolithographie eingesetzt werden.

Erfindungsgemäß kann das zu erzeugende schlagzähe Bauteil mit mindestens einer von der Oberfläche des Bauteils beabstandeten zähen Schicht additiv aufgebaut werden, wobei die zähe Schicht gegenüber dem übrigen Bauteilvolumen eine höhere Zähigkeit aufweist, was durch ein unterschiedliches Material mit anderer chemischer Zusammensetzung und / oder durch Ausbildung unterschiedlicher Gefüge erreicht werden kann. Dies kann durch unterschiedliche Abscheideparameter bei der Durchführung des additiven Herstellungsprozesses oder durch eine Nachbehandlung eines Teils von einer oder mehreren abgeschiedenen Lagen erreicht werden.

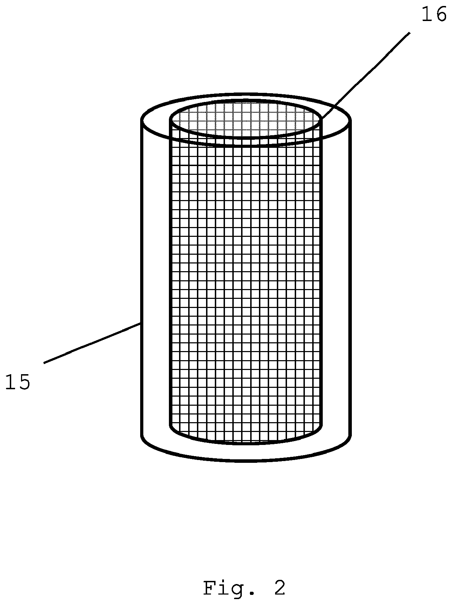

Die Figur 2 zeigt ein erstes Ausführungsbeispiel eines erfindungsgemäßen Bauteils 15 mit einer von der Bauteiloberfläche beanstandeten, zähen Schicht 16, die bei dem in Figur 2 gezeigten Ausführungsbeispiel nicht als kontinuierliche Schicht, sondern als unterbrochene Schicht in Form eines zylinderrohrförmigen Gitters ausgebildet ist und beabstandet zur Mantelfläche des zylinderförmigen Bauteils 15 angeordnet ist. Das Bauteil 15 weist die Form eines Vollzylinders auf, in dem die zylinderrohrförmige, zähe Schicht als Gitterstruktur eingelagert ist. Bei einer lageweisen Abscheidung entlang der Zylinderlängsachse werden in den einzelnen Lagen im Kreisquerschnitt der zylinderrohrförmigen, zähen Schicht 16 jeweils abhängig von der Querschnittsebene der zylinderrohrförmigen Gitterstruktur Kreissegmente der horizontalen Gitterstreben und / oder Teilabschnitte der vertikalen Gitterstreben durch entsprechende Abscheidung beim additiven Herstellungsprozess und / oder durch eine geeignete Nachbehandlung einer oder mehrerer zuletzt abgeschiedener Lagen, beispielsweise durch erneutes Aufschmelzen mittels des Elektronenstrahls 5, erzeugt. Die so erzeugte zylinderrohrförmige, zähe Schicht 16 mit einer Gitterstruktur weist aufgrund der unterschiedlichen Abscheidungsbedingungen und / oder der Nachbehandlung gegenüber dem übrigen Material des Bauteils 15 eine andere chemische Zusammensetzung und / oder ein verändertes Gefüge auf und besitzt dadurch eine höhere Zähigkeit als das übrige, umgebende Material des Bauteils 15 mit geringerer Zähigkeit.

Ist das Bauteil 15 beispielsweise aus einer TiAl - Legierung, insbesondere einer sogenannten TNM TiAl - Legierung mit Niob und Molybdän als Legierungsbestandteile, gebildet, so kann die Veränderung der chemischen Zusammensetzung im Bereich der zylinderrohrförmigen, zähen Schicht 16 sowie deren geänderte Gefügeausbildung durch geänderte Abscheidebedingungen, wie veränderte Schmelztemperatur des Pulvermaterials oder längere Verweildauer des Elektronenstrahls an den entsprechenden Bereichen in der jeweiligen Lage erreicht werden. Durch die höhere Schmelztemperatur oder längere Haltezeit der Schmelze bei höheren Temperaturen kommt es zu einem Abdampfen des leichter flüchtigen Aluminiums, sodass der Aluminiumanteil der TiAl - Legierung reduziert wird, wodurch eine Titan - reichere Legierung bzw. eine Titan - Legierung im Bereich der zähen Schicht 16 vorliegt, während das übrige Bauteil 15 außerhalb der zylinderrohrförmigen Gitterstruktur der zähen Schicht 16 aus der intermetallischen TiAl - Legierung mit höherem Aluminiumanteil und geringerer Zähigkeit gebildet ist. Da gleiche Ergebnis kann erreicht werden, wenn bei einer Nachbehandlung in den Bereichen der zähen Schicht 16 ein Erwärmen oder erneutes Aufschmelzen des abgeschiedenen Materials erfolgt, sodass dadurch Aluminium verdampfen und dessen Anteil an der Materialzusammensetzung verringert werden kann.

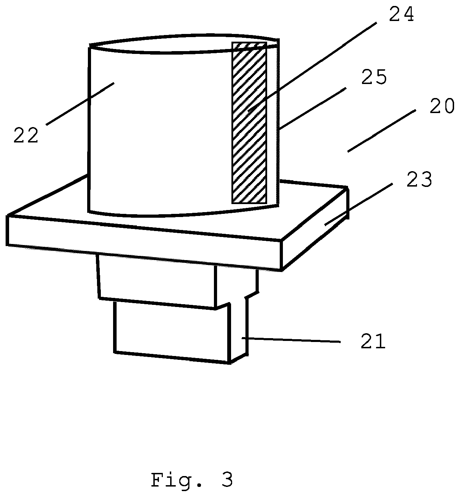

Die Figur 3 zeigt als weiteres Ausführungsbeispiel eine Schaufel 20 einer Strömungsmaschine mit einem Schaufelblatt 22 und einem Schaufelfuß 21 sowie einem zwischen Schaufelblatt 22 und Schaufelfuß 21 angeordneten, innerem Deckband 23. Die Schaufel 20 ist beispielsweise aus einer TiAl - Legierung mit 43,5 at.% Al, 4 at.% Nb, 1 at.% Mo und 0,1 at.% Bor sowie Rest Ti und unvermeidbaren Verunreinigungen gebildet.

Die Schaufel 21 ist additiv aus einem Pulvermaterial der TiAl - Legierung oder einer entsprechend angepassten Legierung, die eine entsprechende Zusammensetzung nach der Herstellung ermöglicht, oder aus einem Pulvergemisch der Elementpulver der Bestandteile der Legierung durch selektives Elektronenstrahlschmelzen beispielsweise mit einer Vorrichtung aus Fig. 1 gebildet, wobei lagenweise entsprechend dem Querschnitt der Schaufel 20 durch Aufschmelzen und Erstarren von Pulver die Schaufel 20 in entsprechenden Lagen auf dem bereits hergestellten Teil der Schaufel 20 gebildet wird.

In der Nähe einer der Schaufelkanten 25 ist die Zähigkeit des Schaufelblatts 22 durch Vorsehen einer dünnen, zähen Schicht 24, die parallel zur Schaufelkante 25 im Inneren des Schaufelblatts 22 in der Nähe der Schaufelblattoberfläche ausgebildet ist, erhöht. Die quaderförmige, zähe Schicht 24 kann beispielsweise in einem Abstand von 100 µm bis 1200 µm zur Bauteiloberfläche angeordnet sein und in einer Richtung senkrecht zur Bauteiloberfläche eine Dicke von ca. 200 µm bis 1500 µm aufweisen. Durch entsprechendes Abdampfen von Aluminium aus dem Bereich der zähen Schicht 24 bei der Abscheidung durch geänderte Abscheideparameter und / oder eine geeignete Nachbearbeitung im Bereich der zähen Schicht 24, beispielsweise durch höhere Schmelztemperaturen oder eine längere Verweildauer des Elektronenstrahls, kann das Aluminium bis auf Anteile von 10 at.% abdampfen, sodass entsprechend weniger Aluminium im Bereich der zähen Schicht 24 enthalten ist. Beispielsweise kann die so gebildete Titan-Legierung im Bereich der zähen Schicht 24 die folgenden Zusammensetzungen aufweisen:

| Ti - Legierung | at.% | at.% | at.% |
|---|---|---|---|
| Ti | 81.9 | 77,3 | 72,8 |
| Al | 10,0 | 15,0 | 20,0 |
| Nb | 6,4 | 6,0 | 5,7 |
| Mo | 1,6 | 1,5 | 1,4 |
| B | 0,2 | 0,2 | 0,1 |

Durch die Ausbildung eine zähen Schicht 24 kann die Anfälligkeit der Schaufel 20 zur Rissausbildung insbesondere bei einer Schlagbeanspruchung im Bereich der Schaufelkanten 25 verringert werden und so die Lebensdauer einer entsprechenden Schaufel 20 erhöht werden.

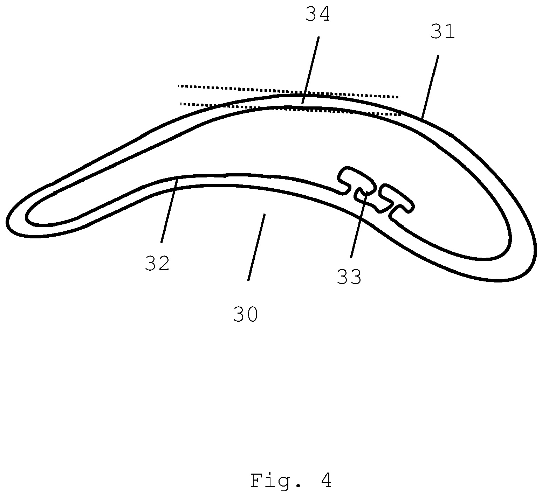

Während bei dem Ausführungsbeispiel der Figur 3 die zähe Schicht 24 lediglich in einem Teil des Bauteils 20 bzw. nur bezüglich eines Teils der Bauteiloberfläche ausgebildet ist, zeigt der Querschnitt der Fig. 4 durch das Schaufelblatt einer weiteren Schaufel 30, dass eine zähe Schicht 32 auch umlaufend am Rand des Querschnitts beabstandet zur Schaufeloberfläche 31 angeordnet sein kann. Der Abstand 34 der zähen Schicht 32 zur Schaufeloberfläche 31 ist durch die gestrichelten Linien verdeutlicht, die senkrecht zur Oberflächennormale des entsprechenden Oberflächenbereichs als Tangenten zur Oberfläche bzw. zur zähen Schicht 32 verlaufen und den Abstand 34 definieren. Der Abstand 34 kann auch in diesem Ausführungsbeispiel im Bereich von 100 bis 1200 µm liegen, wobei allgemein der Abstand von der Bauteiloberfläche 31 bis zur Grenzfläche der zähen Schicht 32 gemessen werden kann.

Der Querschnitt durch das Schaufelblatt der Schaufel 30 zeigt zudem, dass die zähe Schicht 32 in ihrem Abstand zur Bauteiloberfläche 31 variiert werden kann und / oder entsprechende Schichtstrukturen 33 ausbilden kann, wie dies durch die hammerförmigen Schichtstrukturen 33 der zähen Schicht 32 gezeigt ist. Dadurch lässt sich die Schlagzähigkeit und die Unempfindlichkeit der Schaufel 30 gegenüber Schlagbeanspruchung weiter erhöhen.

Im gezeigten Querschnitt haben die Schichtstrukturen 33 einen Verzahnungsverlauf, welcher die beidseitig der Schicht gelegenen Bereiche im Querschnitt formschlüssig ineinander verzahnt. Im gezeigten Beispiel sind diese Bereich in alle Richtungen parallel zum Schnitt formschlüssig verzahnt.

In anderen Ausführungen kann der Formschluss auch nur in einer bestimmten Richtung parallel zum Schnitt vorliegen.

Durch die Querschnittsansicht der Figur 4 lässt sich auch verdeutlichen, wie eine entsprechende zähe Schicht 32 in einfacher Weise bei einem generativen bzw. additiven Herstellungsprozess erzeugt werden kann. Die Ebene, auf die in der Darstellung der Figur 4 geschaut wird, kann bei generativer Herstellung auch eine Lage darstellen, die auf dem Halbzeug erzeugt wird. Entsprechend wird deutlich, dass im Bereich der zähen Schicht 32 die Abscheidebedingungen in geeigneter Weise variiert werden können, um die zähe Schicht 32 zu erzeugen, während im Übrigen Querschnittsbereich der Schaufel 30 die Abscheidebedingungen so gewählt werden, dass das Schaufelmaterial mit dem gewünschten Eigenschaftsprofil, welches zumindest eine niedrigere Zähigkeit aufweist, abgeschieden wird. Sofern die zähe Schicht 32 alternativ oder zusätzlich durch eine Nachbearbeitung erzeugt werden soll, kann der Elektronenstrahl zum erneuten Erwärmen bzw. Aufschmelzen des bereits abgeschiedenen Materials, beispielsweise zur Verdampfung von Aluminium, entlang dem Querschnittsverlauf der zähen Schicht 32 über den Querschnitt des Schaufelblatts geführt werden, um die zähe Schicht 32 zu erzeugen. Damit ist eine einfache und schnelle Herstellung eines Bauteils mit einer innen liegenden zähen Schicht zur Erhöhung der Zähigkeit und insbesondere Schlagzähigkeit des Bauteils gegeben.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: Vorrichtung
- 2: Hubtisch
- 3: Halbzeug bzw. hergestelltes Bauteil
- 4: Elektronenquelle
- 5: Elektronenstrahl
- 6: Pulverbett
- 7: Auflagetisch
- 8: Schieber
- 9: Hubtisch
- 10: Pulver
- 11: Gehäuse
- 15: zylindrisches Bauteil
- 16: zylinderrohrförmige zähe Schicht
- 20: Schaufel
- 21: Schaufelfuß
- 22: Schaufelblatt
- 23: Deckband
- 24: zähe Schicht
- 25: Schaufelkante
- 30: Schaufel
- 31: Schaufeloberfläche
- 32: zähe Schicht
- 33: Schichtstruktur
- 34: Abstand der zähen Schicht von der Bauteiloberfläche

## Patentansprüche

1. Verfahren zur Herstellung eines schlagzähen Bauteils (15,20,30), insbesondere eines Bauteils (20,30) einer Strömungsmaschine, wie eines Flugzeugtriebwerkes, wobei das Bauteil (15,20,30) zumindest teilweise über ein additives Fertigungsverfahren aus einem Pulvermaterial so hergestellt wird, dass das Bauteil (15,20,30) mindestens einen ersten Bereich aus einem Material mit einer ersten Zähigkeit und mindestens einem zweiten Bereich (16,24,32) aus einem Material mit einer zweiten Zähigkeit gebildet wird, wobei die zweite Zähigkeit größer als die erste Zähigkeit ist und wobei der zweite Bereich (16,24,32) zumindest in einem Teil des Bauteils als eine kontinuierliche oder unterbrochene Schicht vorzugsweise parallel zur Oberfläche (31) des Bauteils (15,20,30) in einem Abstand zur Oberfläche (31) des Bauteils (15,20,30) ausgebildet wird.

2. Verfahren nach Anspruch 1,
**dadurch gekennzeichnet, dass**
bei der additiven Fertigung das Bauteil (15,20,30) lagenweise auf einem Substrat oder einem vorher erzeugten Teil des Bauteils (15,20,30) aus Pulvermaterial aufgebaut und zu einem festen Bauteil gefügt wird, wobei das Verfahren, insbesondere aus einer Gruppe ausgewählt ist, die selektives Laserschmelzen, selektives Elektronenstrahlschmelzen, selektives Lasersintern, selektives Elektronenstrahlsintern und Pulverauftragsschweißen umfasst, dass
die Schicht in einem Schnitt durch das Bauteil, insbesondere senkrecht zu einer Aufbaurichtung, einen geschlossenen Ringverlauf aufweist und/oder als zusammenhängende Linie oder als unterbrochene Linie beabstandet zur Oberfläche (31) des Bauteils verläuft, dass
die Zähigkeit des beid- oder mehrseitig an die Schicht angrenzenden Materials geringer als die zweite Zähigkeit ist, insbesondere der ersten Zähigkeit entspricht, und/oder dass
in einem Schnitt durch das Bauteil, insbesondere senkrecht zu einer Aufbaurichtung, eine Schnittlinie der Schicht zwei Materialbereiche mit geringerer Zähigkeit, insbesondere der ersten Zähigkeit, voneinander trennt und einen Verzahnungsverlauf (33) aufweist, welcher die getrennten Bereiche formschlüssig, insbesondere in alle Richtungen parallel zum Schnitt, ineinander verzahnt.

3. Verfahren nach einem der vorhergehenden Ansprüche,
**dadurch gekennzeichnet, dass**
das Material mit zweiter Zähigkeit mit gegenüber dem Material mit erster Zähigkeit unterschiedlicher Zähigkeit durch eine unterschiedliche additive Abscheidung, insbesondere durch eine additive Abscheidung mit einem oder mehreren unterschiedlichen Abscheideparametern und / oder durch eine Nachbearbeitung während der additiven Abscheidung, insbesondere nach der Abscheidung von jeder oder mehreren Lagen vorzugsweise mit einem hochenergetischen Strahl, wie einem Laser - oder Elektronenstrahl erzeugt wird, insbesondere indem nach der additiven Abscheidung einer Lage die betreffende Lage nochmals entlang einer Linienkontur zur Bildung einer Lage der Schicht mit dem hochenergetischen Strahl behandelt wird.

4. Verfahren nach Anspruch 3,
**dadurch gekennzeichnet, dass**
der oder die unterschiedlichen Abscheideparameter bei der additiven Abscheidung unterschiedliche Aufschmelz - oder Sintertemperaturen und / oder unterschiedliche Haltezeiten im aufgeschmolzenem Zustand oder im erwärmten Zustand und / oder unterschiedliche Umgebungsdrücke umfassen.

5. Verfahren nach einem der Ansprüche 3 oder 4,
**dadurch gekennzeichnet, dass**
die unterschiedlichen Abscheideparameter des Pulvermaterials so gewählt werden, dass unterschiedliche Mengen an Bestandteilen des Pulvermaterials verdampfen.

6. Verfahren nach einem der Ansprüche,
**dadurch gekennzeichnet, dass**
die Nachbearbeitung eine erneute Erwärmung oder ein erneutes Aufschmelzen zumindest eines Teils einer bereits additiv abgeschiedenen Lage des Bauteils, vorzugsweise in einer Breite von 100 µm bis 2000 µm, insbesondere 200 µm bis 1500 µm und / oder einer Tiefe von mindestens einer Lagendicke umfasst, wobei insbesondere bestimmte Bestandteile verdampft werden.

7. Verfahren nach einem der vorhergehenden Ansprüche,
**dadurch gekennzeichnet, dass**
als Pulvermaterial zur additiven Abscheidung ein Pulver einer TiAl - Legierung und / oder eine Mischung aus Pulvern der einzelnen Elemente zur Bildung einer TiAl - Legierung verwendet wird, insbesondere eine TiAl - Legierung, die 43,5 bis 48 at.% Al, 4 bis 6 at.% Nb und von den Legierungselementen Mo, W, Zr, Si, C und B in Summe bis zu 2 at.% enthält und Rest Ti sowie unvermeidbare Verunreinigungen, vorzugsweise 43,5 at.% Al, 4 at.% Nb, 1 at.% Mo und 0,1 at.% Bor sowie Rest Ti und unvermeidbare Verunreinigungen.

8. Verfahren nach einem der vorhergehenden Ansprüche,
**dadurch gekennzeichnet, dass**
das Bauteil nach der additiven Fertigung einer Wärmebehandlung unterzogen wird, um die Gefüge des Materials mit erster Zähigkeit und des Materials mit zweiter Zähigkeit einzustellen.

9. Schlagzähes Bauteil, insbesondere hergestellt über ein additives Fertigungsverfahren und/oder eine Schaufel für eine Strömungsmaschine, insbesondere Flugzeugtriebwerk, vorzugsweise nach einem der vorhergehenden Ansprüche, wobei das Bauteil (15,20,30) mindestens einen ersten Bereich aus einem Material mit einer ersten Zähigkeit und mindestens einen zweiten Bereich (16,24,31) aus einem Material mit einer zweiten Zähigkeit aufweist, wobei die zweite Zähigkeit größer als die erste Zähigkeit ist, und wobei der zweite Bereich (16,24,31) zumindest in einem Teil des Bauteils (15,20,30) als eine kontinuierliche oder unterbrochene Schicht in einem Abstand (34) zur Oberfläche (31) des Bauteils (15,20,30) ausgebildet ist.

10. Bauteil nach Anspruch 9,
**dadurch gekennzeichnet, dass**
der zweite Bereich (16,24,31) zumindest in einem Teil des Bauteils (15,20,30) parallel zur Oberfläche (31) des Bauteils (15,20,30) verläuft, dass
die Schicht in einem Schnitt durch das Bauteil, insbesondere senkrecht zu einer Aufbaurichtung, einen geschlossenen Ringverlauf aufweist und/oder als zusammenhängende Linie oder als unterbrochene Linie beabstandet zur Oberfläche (31) des Bauteils verläuft, dass
die Zähigkeit des beid- oder mehrseitig an die Schicht angrenzenden Materials geringer als die zweite Zähigkeit ist, insbesondere der ersten Zähigkeit entspricht, und/oder dass
in einem Schnitt durch das Bauteil, insbesondere senkrecht zu einer Aufbaurichtung, eine Schnittlinie der Schicht zwei Materialbereiche mit geringerer Zähigkeit, insbesondere der ersten Zähigkeit, voneinander trennt und einen Verzahnungsverlauf (33) aufweist, welcher die getrennten Bereiche formschlüssig, insbesondere in alle Richtungen parallel zum Schnitt, ineinander verzahnt.

11. Bauteil nach Anspruch 9 oder 10,
**dadurch gekennzeichnet, dass**
das Material mit zweiter Zähigkeit sich gegenüber dem Material mit erster Zähigkeit durch eine unterschiedliche chemische Zusammensetzung und / oder eine unterschiedliche Mikrostruktur unterscheidet.

12. Bauteil nach einem der Ansprüche 9 bis 11,
**dadurch gekennzeichnet, dass**
die unterbrochene Schicht (16) eine Netz - oder Gitterstruktur aufweist.

13. Bauteil nach einem der Ansprüche 9 bis 12,
**dadurch gekennzeichnet, dass**
die Schicht (16,24,32) aus dem Material mit einer zweiten Zähigkeit sich 100 µm bis 1200 µm, insbesondere 200 µm bis 500 µm unterhalb der Bauteiloberfläche befindet und / oder die Schicht (16,24,32) aus dem Material mit einer zweiten Zähigkeit eine in Richtung senkrecht zur Bauteiloberfläche sich erstreckende Schichtdicke von 100 µm bis 2000 µm, insbesondere 200 µm bis 1500 µm aufweist.

14. Bauteil nach einem der Ansprüche 9 bis 13,
**dadurch gekennzeichnet, dass**
das Material mit der ersten Zähigkeit eine TiAl - Legierung ist, insbesondere eine TiAl - Legierung mit 43,5 at.% Al, 4 at.% Nb, 1 at.% Mo und 0,1 at.% Bor sowie Rest Ti und unvermeidbaren Verunreinigungen, und das Material mit der zweiten Zähigkeit ein Material mit gegenüber dem Material mit der ersten Zähigkeit verringertem Aluminium - Gehalt ist, insbesondere eine Ti - Legierung mit 10 bis 20 at.% Al, 5,7 bis 6,4 at.% Nb, 1,4 bis 1,6 at.% Mo und 0,1 bis 0,2 at.% Bor sowie Rest Ti und unvermeidbare Verunreinigungen, vorzugsweise eine Ti - Legierung mit 10 at.% Al, 6,4 at.%Nb, 1,6 at.% Mo und 0,2 at.% Bor sowie Rest Ti und unvermeidbare Verunreinigungen.

15. Bauteil nach Anspruch 14,
**dadurch gekennzeichnet, dass**
Material mit erster Zähigkeit mit einem intermetallischen TiAl - Gefüge mit γ - TiAl und α₂ - Ti3Al und das Material mit zweiter Zähigkeit mit einer Mikrostruktur einer Ti - Legierung auf Basis von α - Phase, β - Phase und / oder ω - Phase aufgebaut ist.
